# EUROPÄISCHE PATENTSCHRIFT

(11) **EP 3 931 764 B1**
(45) Veröffentlichungstag und Bekanntmachung des Hinweises auf die Patenterteilung: **26.11.2025**
(21) Anmeldenummer: 20705184.8
(22) Anmeldetag: 13.02.2020
(51) Int. Cl.: G06N 10/70, G06N 10/40

(54) **VERFAHREN UND VORRICHTUNG FÜR EINE QUBIT FEHLERERKENNUNG**
METHOD AND APPARATUS FOR QUBIT ERROR DETECTION
PROCÉDÉ ET DISPOSITIF DE DÉTECTION D'ERREUR DANS DES QUBITS

(30) Priorität: 27.02.2019 DE 102019202661
(43) Veröffentlichungstag der Anmeldung: 05.01.2022
(73) Patentinhaber: Forschungszentrum Jülich GmbH, 52428 Jülich (DE)
(72) Erfinder: LANGROCK, Veit, 52146 Würselen (DE); DIVINCENZO, David, 6367 DA Voerendaal (NL)
(74) Vertreter: Gille Hrabal Partnerschaftsgesellschaft mbB Patentanwälte
(86) Internationale Anmeldenummer: PCT/EP2020/053735
(87) Internationale Veröffentlichungsnummer: WO 2020/173714

(56) Entgegenhaltungen:
- JONAS HELSEN ET AL: "Quantum error correction in crossbar architectures", ARXIV.ORG, CORNELL UNIVERSITY LIBRARY, 201 OLIN LIBRARY CORNELL UNIVERSITY ITHACA, NY 14853, 20 December 2017 (2017-12-20), XP081303866, DOI: 10.1088/2058-9565/AAB8B0
- TAKAFUMI FUJITA ET AL: "Coherent shuttle of electron-spin states", NPJ QUANTUM INFORMATION, vol. 3, no. 1, 1 December 2017 (2017-12-01), XP055690434, DOI: 10.1038/s41534-017-0024-4

## Beschreibung

Die Erfindung bezieht sich auf ein Verfahren und eine Vorrichtung für eine Qubit Fehlererkennung.

Das Quantenbit (kurz Qubit genannt) dient bei Quantencomputern oder Quantenkryptografie als kleinste Speichereinheit. Ein Qubit kann in Übereinstimmung nur zwei messbare Zustände annehmen, die wie bei der Bit - Speichereinheit als 0 und 1 bezeichnet werden können.

Im Unterschied zu einem Bit kann ein Qubit vor einer Messung mehr als nur zwei Zustände einnehmen.

Werden die beiden messbaren Zustände als 0 und 1 bezeichnet, so können die von 0 und 1 abweichenden Zustände nicht gemessen werden. Sobald der Zustand eines Qubits gemessen wird, dann wird durch die Messung bewirkt, dass das Qubit entweder den Zustand 0 oder den Zustand 1 einnimmt.

Ein Qubit wird in der Praxis in der Regel durch ein quantenphysikalisches System realisiert, das nur zwei messbare Zustände einnehmen kann. Ein System mit einem Elektron, bei dem nur die Spins ½ und -½ bzw. "spin up" und "spin down" gemessen werden können, kann als Qubit dienen. Der Spin eines Elektrons kann vor seiner Messung quantenmechanische Zustände einnehmen, die sich aus der Überlagerung der möglichen Spins % und -½ bzw. "spin up" und "spin down" ergeben. Der Spin eines Elektrons kann also vor seiner Messung sowohl % als auch -½ bzw. "spin up" und "spin down" sein. Eine Überlagerung dieser Zustände wird in der Quantenmechanik Superposition genannt. Die Druckschrift "Li et al., A crossbar network for silicon quantum dot qubits, Sci. Adv. 2018; 4: eaar3960, 6 July 2018" offenbart Qubits für einen Quantencomputer, die durch Elektronenspins realisiert werden.

Ein anderes quantenphysikalisches Phänomen wird Verschränkung genannt. Werden zwei oder mehr Teilchen miteinander verschränkt, so verhalten sich diese nicht mehr unabhängig voneinander. Sind zwei Teilchen miteinander verschränkt, so hängt der Zustand des einen Teilchens vom Zustand des anderen Teilchens ab und umgekehrt. Es eine Korrelation zwischen den beiden Teilchen.

Superposition und Verschränkung werden bei einem Quantencomputer für eine Berechnung ausgenutzt. Hat ein Quantencomputer gerechnet, so wird das Ergebnis gemessen. Im Fall von Elektronen werden also die Spinzustände nach dem Rechnen gemessen. Das Messergebnis gibt dann das berechnete Ergebnis wieder.

Es gibt auch andere Möglichkeiten, um ein Qubit in der Praxis zu realisieren. So kann ein Qubit durch einen supraleitenden Schwingkreis realisiert sein, bei dem nur zwei verschiedene Niveaus von elektrischen Strömen fließen können. Anregungsniveaus von neutralen Atomen oder Ionen können genutzt werden, um in der Praxis Qubits zu realisieren.

Aus der Druckschrift WO 2018/062991 A1 ist bekannt, durch physische Verbindung und Implementierung geeigneter Interaktionen zwischen physikalischen Qubits logische 0- und 1-Zustände in Multi-Qubit-Strukturen zu speichern, die logische Qubits genannt werden.

Eine Vielzahl von logischen Qubits, die mit dem Austausch und der Verarbeitung von Quanteninformationen und damit der Durchführung von Quantenrechnungen verbunden sind, wird als Quantenprozessor, Quantenchip oder Quantencomputer bezeichnet.

Eine aus der Druckschrift WO 2018/062991 A1 bekannte Anordnung ist ein Gitter von Qubits in einer Ebene, die durch lithographische Verfahren hergestellt sein können.

Aus der Druckschrift WO 2018/062991 A1 ist bekannt, dass Fertigungseinschränkungen, Materialeinschränkungen, Einschränkungen der Regelgenauigkeit Kopplungen mit externen Rauschquellen, Interaktion mit externen Partikeln usw. zum Zerfall des physikalischen Qubit-Quantenzustands von einem gewünschten Quantenzustand in einen inkohärenten Zustand führen. Daher sind die in den physikalischen Qubits (Überlagerungen von 0 und 1) gespeicherten Informationen von Natur aus instabil.

Aus der Druckschrift WO 2018/062991 A1 ist bekannt, dass durch Kodierung eines logischen Quantenzustands unter Verwendung mehrerer physikalischer Qubits ein wesentlich stabileres System entsteht, das Informationen speichert und sie weniger anfällig für äußere Einflüsse macht. Um Fehler erkennen und korrigieren zu können, werden außerdem "ancillary qubits" genannte Qubits eingesetzt. Diese zu Kontrollzwecken eingesetzten Qubits werden nachfolgend Paritätsqubits genannt. Ein Qubit, dessen ordnungsgemäßer Zustand mithilfe eines Paritätsqubits ermittelt wird, wird nachfolgend Datenqubit genannt.

Aus der Druckschrift WO 2018/062991 A1 ist ein Verfahren bekannt, um mit Hilfe von Paritätsqubits Fehler bei Datenqubits erkennen zu können.

In der Druckschrift "Quantum computation with quantum dots, Daniel Loss und David P. DiVincenzo, 1998 PHYSICAL REVIEW A JANUARY 1998 VOLUME 57, NUMBER 1, p. 120 - 126" wird eine Quantenberechnung mithilfe von elektrisch angesteuerten Spins von Exzesselektronen beschrieben.

Aus den Druckschriften "A quantum-dot spin qubit with coherence limited by charge noise and fidelity higher than 99.9%, Jun Yoneda et al., NATURe NANOTecHNOIOGY | VOL 13 | FEBRUARY 2018 | 102-106 |" (siehe https://www.nature.com/articles/s41565-017-0014-x), "A crossbar network for silicon quantum dot qubits, Ruoyu Li et al., Sci. Adv. 2018; 4 : eaar3960, 6 July 2018" sowie US 2017/0317203 A1 sind Qubits bekannt, die durch Elektronenspins realisiert werden. Qubits können durch Bewegen in einem Gradient - Magnetfeld manipuliert werden. In den Druckschriften "A crossbar network for silicon quantum dot qubits, Ruoyu Li et al., Sci. Adv. 2018; 4: eaar3960, 6 July 2018" sowie "Fault-tolerant architecture for quantum computation using electrically controlled semiconductor spins, J. M. TAYLOR et al., nature physics VOL 1 DECEMBER 2005, p. 177 - 183" werden Transporteinrichtungen beschrieben, durch die Qubits bewegt werden können.

Aus der Druckschrift "Surface codes: Towards practical large-scale quantum computation, Austin G. Fowler et al., PHYSICAL REVIEW A 86, 032324 (2012), DOI: 10.1103/PhysRevA.86.032324" ist bekannt, Fehler bei Datenqubits durch Paritätsqubits zu ermitteln. Aus dieser Druckschrift ist bekannt, dass Qubits durch Ionen, Spins bei Halbleitern oder supraleitende Schaltkreise realisiert werden können.

Aus der Druckschrift "Single-shot read-out of an individual electron spin in a quantum dot, J. M. Elzerman, R. Hanson, L. H. Willems van Beveren, B. Witkamp, L. M. K. Vandersypen & L. P. Kouwenhoven, NATURE | VOL 430 | 22 JULY 2004, p 431 - 435" ist die Bereitstellung von Paritätsqubits aus einem Fermionen-See bekannt.

Aus den Druckschriften US 2008/0185576 A1 und "Chiaverini et al., Realization of quantum error correction, Nature, Vol. 432, 2 December 2004, S. 602 - 605" und "Jonas Helsen et al., Quantum error correction in crossbar architectures, arXiv.org, 20. Dezember 2017" sind Verfahren zur Detektion fehlerhafter Zustände von Datenqubits mit Hilfe von Paritätsqubits bekannt.

Durch die Erfindung soll erreicht werden, fehlerhafte Zustände bei Daten - Qubits geeignet erkennen zu können.

Zur Lösung dieser Aufgabe dient ein Verfahren mit den Merkmalen des ersten Anspruchs. Eine Vorrichtung umfasst zur Durchführung des Verfahrens die Merkmale des Nebenanspruchs. Vorteilhafte Ausgestaltungen ergeben sich aus den abhängigen Ansprüchen.

Zur Lösung der Aufgabe ist ein Verfahren zur Erkennung eines fehlerhaften Zustands eines Datenqubits mithilfe eines Paritätsqubits vorgesehen. Das Paritätsqubit kann durch eine Bewegungseinrichtung bewegt werden. Es kann ergänzend eine Bewegungseinrichtung vorhanden sein, mit der das Datenqubit bewegt werden kann. Der Abstand zwischen dem Datenqubit und dem Paritätsqubit ist zunächst so groß, dass das Paritätsqubit nicht mit dem Datenqubit verschränkt werden kann. Der Abstand zwischen dem Datenqubit und dem Paritätsqubit wird verringert, indem das Datenqubit entlang eines ersten Wegs und das Paritätsqubit entlang eines zweiten Wegs bewegt werden, bis das Datenqubit mit dem Paritätsqubit verschränkt wurde. Der zweite Weg ist länger als der erste Weg und/oder die Bewegungsgeschwindigkeit des Paritätsqubits ist größer als die Bewegungsgeschwindigkeit des Datenqubits.

Der Zustand von Datenqubits ist regelmäßig instabiler im Vergleich zu anfänglich gewählten Zuständen von Paritätsqubits. Das Auftreten von Fehlern bei Datenqubits wird erfindungsgemäß dadurch vermieden, in dem Datenqubits nur relativ kurz und/oder nur relativ langsam bewegt werden und zwar im Vergleich zu Paritätsqubits. Da Zustände von Paritätsqubits so gewählt werden können, dass diese Zustände anfänglich vergleichsweise stabil sind, können Paritätsqubits vergleichsweise unproblematisch bewegt werden. Fehlerhafte Zustände bei Datenqubits können so einerseits zuverlässig erkannt werden. Das Auftreten von Fehlern bei Datenqubits wird vermieden, in dem diese nur gering und/oder nur langsam bewegt werden. Da der Zustand von Paritätsqubits anfänglich vergleichsweise stabil gewählt werden kann, ist es unkritisch, diese über längere Distanzen zu bewegen und/oder mit höherer Geschwindigkeit.

Um Paritätsqubits mit Datenqubits zu verschränken, werden daher bevorzugt die Paritätsqubits zunächst mit schneller Geschwindigkeit in Richtung Datenqubits bewegt. Im Anschluss an eine solche schnelle Bewegung der Paritätsqubits werden die Datenqubits vorzugsweise mit langsamer Geschwindigkeit in Richtung Paritätsqubits bewegt, um dadurch den Abstand so zu verringern, dass Paritätsqubits mit Datenqubits verschränkt werden. Sind die Paritätsqubits mit den Datenqubits vollständig verschränkt worden, so werden die Datenqubits vorzugsweise mit langsamer Geschwindigkeit von den Paritätsqubits wegbewegt. Ist der Abstand zwischen Datenqubits und Paritätsqubits hinreichend vergrößert worden, so werden die Paritätsqubits vorzugsweise mit schneller Geschwindigkeit zu Messstationen bewegt.

Paritätsqubits werden allerdings bevorzugt auch dann langsam bewegt, also mit geringer Geschwindigkeit, wenn der Abstand zu Datenqubits gering ist, um eine erhöhte Fehlerquote zu vermeiden. Dies geschieht insbesondere dann, wenn ein Paritätsqubit bereits mit ein oder mehreren Datenqubits verschränkt worden ist und dass Paritätsqubits nun mit weiteren ein oder mehreren Datenqubits verschränkt werden soll. In einer Ausgestaltung werden daher ein oder mehrere Paritätsqubits zunächst mit schneller Geschwindigkeit in Richtung Datenqubits bewegt. Nach einer ersten Verschränkung mit Datenqubits werden die Paritätsqubits dann zunächst mit langsamer Geschwindigkeit weiter bewegt, um Paritätsqubits mit nächsten Datenqubits zu verschränken.

Eine langsame Bewegung bzw. eine langsame Geschwindigkeit meint, dass die Geschwindigkeit langsam ist im Vergleich zu der genannten schnellen Bewegung bzw. schnellen Geschwindigkeit.

Das Paritätsqubit befindet sich grundsätzlich in einem messbaren Zustand, bevor dieses zu ein oder mehreren Datenqubits zwecks Verschränkung bewegt wird. Wird das Paritätsqubit durch ein Spin ½ Teilchen realisiert, so ist der Spin also entweder ½ oder -½. Das Paritätsqubit befindet sich also nicht in einem quantenmechanischen Zustand der Superposition, bei dem der Spin gemäß menschlichen Erklärungsversuchen zugleich sowohl ½ als auch -½ ist. Der Zustand des Paritätsqubits ist dann besonders stabil, sodass das Paritätsqubit über lange Strecken und/oder mit hoher Geschwindigkeit bewegt werden kann, ohne dass allein deshalb der Zustand des Paritätsqubits mit nicht vernachlässigbar kleiner Wahrscheinlichkeit geändert wird.

Vorteilhaft wird das Paritätsqubit zwischen zwei Datenqubits bewegt. Ein Paritätsqubit kann dann mit zwei Datenqubits gleichzeitig verschränkt werden.

Zwei Datenqubits, die mit dem Paritätsqubit verschränkt werden, können sich aus Redundanzgründen planmäßig im korrelierten quantenmechanischen Zustand befinden, um so die Fehleranfälligkeit verbessert zu reduzieren. So können sich zwei Datenqubits dann beispielsweise im gleichen quantenmechanischen Zustand befinden. Durch das Paritätsqubit kann dann überprüft werden, ob sich beide Datenqubits im korrelierten, also zum Beispiel im gleichen quantenmechanischen Zustand befinden. Ist dies der Fall, so ist die Wahrscheinlichkeit hoch, dass die beiden Datenqubits sich im planmäßigen Zustand befinden. Es ist also dann kein Fehler aufgetreten. Wird mithilfe des Datenqubits, welches mit den beiden Datenqubits verschränkt worden ist, festgestellt, dass die beiden Zustände der Datenqubits unterschiedlich sind, so wurde ein Fehler detektiert.

Mit planmäßigem Zustand ist ein Zustand gemeint, der gewollt ist, um mithilfe des Systems beispielsweise rechnen zu können. Ist ein Paritätsqubit mit ein oder mehreren Datenqubits verschränkt worden, so kann eine Änderung des Zustands eines Datenqubits zur Folge haben, dass auch der Zustand des Paritätsqubits geändert wird. Wird der Zustand des Paritätsqubits schließlich gemessen und festgestellt, dass sich der Zustand des Paritätsqubits geändert hat, so wird dadurch das Vorliegen eines Fehlers detektiert.

In einer Ausgestaltung wird das Paritätsqubit nach dem Bewegen zwischen zwei ersten Datenqubits und nach einer Abfrage dieser beiden ersten Datenqubits zwischen zwei weitere Datenqubits bewegt, um diese ebenfalls mit dem Paritätsqubit zu verschränken. Die vier Datenqubits können sich aus Redundanzgründen planmäßig im korrelierten Zustand befinden bzw. planmäßig in den korrelierten Zustand gebracht worden sein. Insgesamt kann auf diese Weise ein Paritätsqubit zur Überprüfung dienen, ob sich vier aus Redundanzgründen vorgesehene Paritätsqubits im vorgesehenen korrelierten Zustand befinden, um besonders zuverlässig Fehler erkennen zu können. Wird der Zustand des Paritätsqubits schließlich gemessen und ergibt die Messung, dass sich der Zustand des Paritätsqubits geändert hat, so wird dadurch ermittelt, dass ein Fehler aufgetreten ist.

Das Paritätsqubit wird vorteilhaft nach einem Bewegen zwischen zwei Datenqubits und nach einer Verschränkung mit den beiden Datenqubits von diesen Datenqubits wegbewegt. Hierdurch wird der Abstand zwischen dem Paritätsqubit und den Datenqubits so vergrößert, dass hinreichend Platz zur Verfügung steht, um den Zustand des Paritätsqubits messen zu können. Nach dem Wegbewegen kann der Zustand des Paritätsqubits daher mit relativ geringem technischem Aufwand gemessen werden.

Vorteilhaft wird eine Mehrzahl von Paritätsqubits zeitgleich zwischen sich paarweise gegenüberliegenden Datenqubits bewegt, um jedes Paritätsqubit mit zumindest zwei Datenqubits zu verschränken. Das Ermitteln von Fehlern kann so beschleunigt und verbessert durchgeführt werden.

Vorteilhaft wird eine Reihe von Paritätsqubits zwischen zwei Reihen von Datenqubits bewegt. Ist eine Reihe von Paritätsqubits zwischen zwei Reihen von Datenqubits bewegt worden, so werden in einer Ausgestaltung im Anschluss daran die beiden Reihen von Datenqubits in Richtung Paritätsqubits bewegt und zwar derart, dass der Abstand schließlich gering genug ist, um jeweils ein Paritätsqubit mit zwei angrenzenden Datenqubits zu verschränken. Diese Ausgestaltung trägt weiter verbessert dazu bei, dass Fehler zuverlässig ermittelt werden können, ohne dadurch die Fehleranfälligkeit übermäßig zu vergrößern.

Eine Reihe von Paritätsqubits wird im Anschluss an eine Verschränkung vorteilhaft von zwei Reihen von Datenqubits wegbewegt. Nach dem Wegbewegen ist der Abstand zwischen den Paritätsqubits und den Datenqubits so groß, dass mit geringem technischem Aufwand der Zustand der Paritätsqubits gemessen werden kann. Die wegbewegten Paritätsqubits können dann zu Messstationen bewegt werden. Mithilfe der Messstationen werden die Zustände der Paritätsqubits gemessen, um zu überprüfen, ob sich eine oder mehrere Datenqubits in einem fehlerhaften und daher in einem nicht planmäßigen Zustand befinden oder befunden haben.

In einer Ausgestaltung umfasst ein Qubit genau ein Teilchen mit Spin ½ oder -½ oder eine Mehrzahl von Teilchen mit Spin ½ oder -½. Es kann sich bei dem Teilchen um ein Elektron oder um ein Defektelektron handeln. Teilchen mit Spin ½ oder -½ lassen sich in einer aus dem Stand der Technik bekannten Weise mit technisch vergleichsweise einfachen Mitteln bewegen, um die Erfindung auszuführen. Eine für das Bewegen eines Qubits vorgesehene Transporteinrichtung kann beispielsweise ein elektrisches Feld erzeugen und/oder verändern, um ein Qubit zu bewegen. Für ein Bewegen werden insbesondere Potentialbarrieren verändert, wodurch Aufenthaltswahrscheinlichkeiten für Qubits geändert werden. Qubits sind dann bewegt worden. Es können dafür aus dem eingangs genannten Stand der Technik bekannte Konstruktionen vorgesehen sein.

In einer Ausgestaltung der Erfindung werden fortlaufend Datenqubits und Paritätsqubits in erfindungsgemäßer Weise miteinander verschränkt. Nach einer Verschränkung werden die Zustände der Paritätsqubits gemessen, um so fortlaufend eine Fehlerkontrolle durchzuführen.

Die Erfindung betrifft außerdem eine Vorrichtung, die so eingerichtet ist, dass ein zuvor beschriebenes Verfahren durch diese Vorrichtung ausgeführt werden kann.

Eine solche Vorrichtung umfasst Datenqubits und Paritätsqubits oder zumindest Einrichtungen zur Erzeugung von Datenqubits und Paritätsqubits. Die Vorrichtung kann eine Bewegungseinrichtung umfassen, mit der Datenqubits und Paritätsqubits bewegt werden können. Die Vorrichtung kann so eingerichtet sein, dass der Abstand zwischen einem Datenqubit und einem Paritätsqubit so groß sein kann, dass das Paritätsqubit mit dem Datenqubit nicht verschränkt wird und daher nicht verschränkt ist. Die Vorrichtung kann so eingerichtet sein, dass der Abstand zwischen dem Datenqubit und dem Paritätsqubit verringert werden kann, indem das Datenqubit entlang eines ersten Wegs und das Paritätsqubit entlang eines zweiten Wegs bewegt werden, bis das Datenqubit mit dem Paritätsqubit verschränkt wird. Die Vorrichtung kann so eingerichtet sein, dass der erste Weg länger ist als der zweite Weg und/oder das die Bewegungsgeschwindigkeit des Paritätsqubits größer als die Bewegungsgeschwindigkeit des Datenqubits ist, um das Paritätsqubit mit dem Datenqubit zu verschränken.

Die Vorrichtung kann so eingerichtet sein, dass das Paritätsqubit in einen messbaren Zustand gebracht werden kann. Damit ist gemeint, dass das Paritätsqubit nicht in einen relativ instabilen Zustand der Superposition gebracht wird, der nicht durch Messen ermittelt werden kann. Ein Fermion kann zur Bereitstellung eines Paritätsqubits dienen. Die Vorrichtung kann so eingerichtet sein, dass durch die Vorrichtung ein messbarer Spinzustand des Fermions einstellbar ist, beispielsweise mithilfe eines magnetischen Feldes, das durch die Vorrichtung bereitgestellt oder erzeugt werden kann. Das magnetische Feld ist bevorzugt ein statisches Gradientenfeld, um den Zustand eines Qubits manipulieren zu können. Es können dafür aus dem eingangs genannten Stand der Technik bekannte Konstruktionen vorgesehen sein. Alternativ werden Qubits durch Spin-Bahn-Kopplungen manipuliert.

Die Vorrichtung kann so eingerichtet sein, dass das Paritätsqubit nach einem Bewegen zwischen ein erstes Datenqubitpaar und nach einem Verschränken mit den beiden Datenqubits des ersten Datenqubitpaars zwischen ein weiteres Datenqubitpaars bewegt werden kann, um mit den beiden weiteren Datenqubits verschränkt zu werden.

Der Abstand zwischen zwei gegenüberliegenden Datenqubits wird vorzugsweise nicht verändert, wenn das vorgenannte Paritätsqubit von dem ersten Datenqubitpaar zwischen zwei weitere Datenqubits eines zweiten Paars bewegt wird. Dies reduziert weiter verbessert die Fehleranfälligkeit, zumal die Strecke für ein Bewegen eines Paritätsqubits von dem ersten Datenqubitpaar zu einem nächsten Datenqubitpaar sehr kurz sein kann.

Die Vorrichtung kann so eingerichtet sein, dass das Paritätsqubit nach einem Bewegen zwischen zwei Datenqubits und nach einem Verschränken des Paritätsqubit mit den Datenqubits wegbewegt wird. Die Vorrichtung kann so eingerichtet sein, dass der Zustand des wegbewegten Paritätsqubits gemessen werden kann.

Die Vorrichtung kann so eingerichtet sein, dass eine Mehrzahl von Paritätsqubits zeitgleich zwischen sich paarweise gegenüberliegenden Datenqubits bewegt werden kann. Die Vorrichtung kann so eingerichtet sein, dass im Anschluss daran die Datenqubits in Richtung Paritätsqubits bewegt werden können, um Verschränkungen herbeizuführen.

Die Vorrichtung kann so eingerichtet sein, dass eine Reihe von Paritätsqubits zwischen zwei Reihen von Datenqubits bewegt werden kann. Die Vorrichtung kann so eingerichtet sein, dass im Anschluss daran die beiden Reihen von Datenqubits auf die Reihe von Paritätsqubits zubewegt werden, sodass eine Verschränkung zwischen jeweils einem Paritätsqubit und zwei daran angrenzenden Datenqubits auftreten, um eine Fehlerprüfung zu ermöglichen.

Die Vorrichtung kann so eingerichtet sein, dass eine Reihe von Paritätsqubits von zwei Reihen von Datenqubits wegbewegt werden kann und im Anschluss daran aus der wegbewegten Reihe von Paritätsqubits die Paritätsqubits zu ein oder mehreren Messstationen der Vorrichtung bewegt werden können.

Die Vorrichtung kann so eingerichtet sein, dass wiederkehrend eine Reihe von Paritätsqubits zwischen zwei Reihen von Datenqubits bewegt wird, um ein jedes Paritätsqubit mit wenigstens zwei Datenqubits zu verschränken und um im Anschluss an die Verschränkung die Paritätsqubits zu Messstationen zu bewegen.

Die Vorrichtung kann so eingerichtet sein, dass ein Qubit genau ein Elektron oder mehrere Elektronen umfasst, welche einen Spin ½ oder -½ haben können. Anstelle eines Elektrons kann auch ein anderes Spin ½ Teilchen eingesetzt sein. Die Vorrichtung kann so eingerichtet sein, dass ein Halbleiter zur Bildung von Qubits vorhanden ist.

Die Vorrichtung kann so eingerichtet sein, dass eine Transporteinrichtung der Vorrichtung ein elektrostatisches Begrenzungspotential erzeugen kann. Ein Qubit kann dann durch mithilfe von elektrostatischen Begrenzungspotentialen bewegt werden.

Die Vorrichtung kann ein oder mehrere elektrische und/oder magnetische Wechselfelder und/oder Gradientenfelder erzeugen, um das Verfahren durchführen zu können. Die Vorrichtung kann Silizium/Silizium - Germanium Heterostrukturen umfassen, um Qubits bereitstellen zu können. Die Vorrichtung kann aber auch Germanium/Silizium - Germanium Heterostrukturen oder Zinkselenid umfassen, um Qubits bereitstellen zu können.

Zustände von Paritätsqubits können beispielsweise durch eine Pauli - Spin - Blockade gemessen werden.

In einer Ausgestaltung der Erfindung umfasst ein Paritätsqubit wenigstens zwei Teilchen wie zum Beispiel Elektronen in einem Singulettzustand oder Triplettzustand. Vorzugsweise befinden sich ein oder mehrere Paritätsqubits vor einer Verschränkung im Singulettzustand. Nach einer Verschränkung kann aufgrund eines Fehlers ein Singulettzustand eines Paritätsqubits in einen Triplettzustand umgewandelt worden sein, was durch Messen mit geringem technischem Aufwand zuverlässig festgestellt werden kann. Eine Vorrichtung umfasst dann eine Einrichtung, um Elektronen aus einem Fermionenreservoir in einen Singulettzustand oder einen Triplettzustand zu bringen. Nach Durchführung der Verschränkung kann der Singulettzustand des Paritätsqubits in einen Ladungszustand in den zwei Quantenpunkten überführt werden (Singulett mit (2,0), Triplett mit (1,1), siehe Druckschrift RevModPhys.79.1217), welcher sich äußerst robust transportieren lässt und im Anschluss mit geringem Aufwand gemessen werden kann.

Die Vorrichtung umfasst in einer Ausgestaltung eine Einrichtung zur Erzeugung einer elektromagnetischen Welle, um den Zustand von Datenqubits einstellen zu können.

Alternativ umfasst die Vorrichtung eine Einrichtung, mit der ein magnetisches Gradientenfeld bereitgestellt werden kann. Durch Bewegen eines Datenqubits in dem magnetischen Gradientenfeld kann dann ein gewünschter Zustand eines Datenqubits eingestellt werden. Insbesondere der letzte Weg, um einen Zustand eines Datenqubits einzustellen, kann durch die Architektur technisch realisiert werden, ohne an technische Machbarkeitsgrenzen zu stoßen.

Zur Lösung der gestellten Aufgabe kann auch nur das Paritätsqubit bewegt werden. Das Datenqubit wird dann also nicht bewegt. Die Bewegungsgeschwindigkeit des Datenqubits und die Länge des zweiten Wegs sind folglich Null. Ansonsten unterscheidet sich diese Variante nicht von der ansonsten beschriebenen erfindungsgemäßen Lösung und deren Ausgestaltungen.

Es zeigen
- Figur 1:: schematische Darstellung einer Architektur zur Erkennung von fehlerhaften Zuständen von Datenqubits mithilfe von Paritätsqubits;
- Figuren 2 bis 6:: schematische Darstellung von Schritten zur Durchführung einer Fehlerkontrolle.

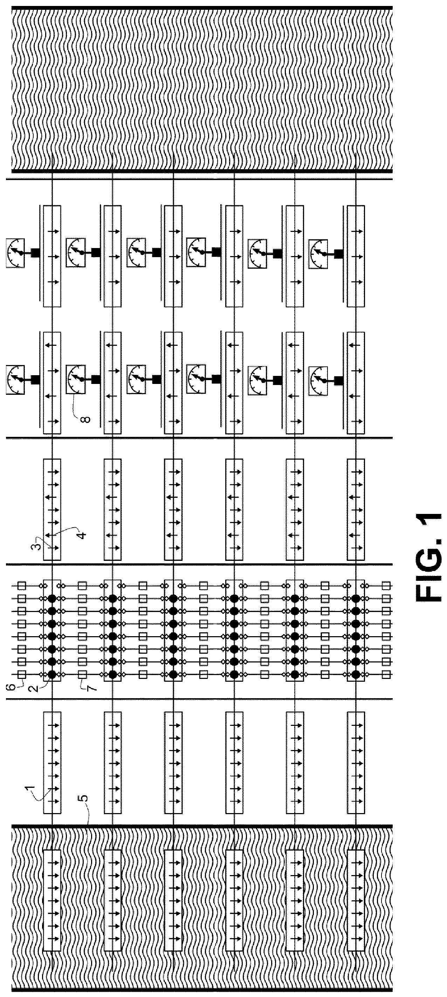

Die Figur 1 verdeutlicht eine Architektur zur Erkennung von fehlerhaften Zuständen von Datenqubits mithilfe von Paritätsqubits. Ein Paritätsqubit 1, 2, 3, 4 umfasst ein Elektron mit messbaren "spin up" und "spin down" Spins oder ein anderes Spin ½ Teilchen wie zum Beispiel Defektelektronen. Wenn im Folgenden von Elektronen die Rede ist, dann gilt dies in gleicher Weise auch für andere Spin ½ Teilchen, falls nicht ausdrücklich etwas anderes gesagt wird. Die in der Figur 1 gezeigten Paritätsqubits 1 und 3 sind durch einen nach unten gerichteten Pfeil dargestellt. Diese befinden sich daher im "spin down" - Zustand. Die Paritätsqubits 4 sind durch einen nach oben gerichteten Pfeil dargestellt. Diese befinden sich im "spin up" - Zustand.

Ein Elektronenreservoir wird durch einen Fermi - See 5 dargestellt. Elektronen aus dem Fermi - See werden zunächst in den "spin down" - Zustand gebracht, um eine Mehrzahl Paritätsqubits 1 bereitzustellen, die wie gezeigt hintereinander angeordnet sein können.

Diese im "spin down" - Zustand befindlichen Paritätsqubits 1 können zwischen Datenqubits 6 und 7 bewegt werden. Datenqubits 6 und 7 können so zu dazwischen befindlichen Paritätsqubits 2 bewegt werden, dass der Abstand eines Paritätsqubits 2 zu zwei Datenqubits 6 und 7 gering genug ist, damit eine Verschränkung zwischen den Paritätsqubits 2 und den angrenzenden Datenqubits 6 und 7 auftreten kann, um den Zustand der beiden Datenqubits 6 und 7 im Sinne einer Fehlererkennung ermitteln zu können. Der Weg, den die Datenqubits 6 und 7 dafür zurücklegen müssen, ist kürzer als der Weg, den die Paritätsqubits 1 zurücklegen müssen, um zwischen die Datenqubits 6 und 7 zu gelangen.

Im Anschluss an eine Verschränkung werden die Datenqubits 6 und 7 voneinander wegbewegt, also der Abstand zwischen den Datenqubits 6 und 7 vergrößert. Die Paritätsqubits 2 werden von den Datenqubits 6 und 7 wegbewegt. Der Weg, den die Datenqubits 6 und 7 dafür zurücklegen müssen, ist kürzer als der Weg, den die Paritätsqubits 2 zurücklegen müssen, um von den Datenqubits 6 und 7 weg bewegt zu werden.

Der "spin down" - Zustand von wegbewegten Paritätsqubits 3 ist nicht verändert worden. Der Spinzustand von wegbewegen Paritätsqubits 4 ist geändert worden. Diese befinden sich daher im "spin up" - Zustand. Durch ein oder mehrere Messgeräte 8 wird der Spinzustand der Paritätsqubits 3 und 4 gemessen.

Ist der Zustand der Spins der Paritätsqubits 3 nicht geändert worden, so konnte kein fehlerhafter Zustand der damit verschränkten Datenqubits 6 und/oder 7 festgestellt werden. Der Zustand der Spins der Paritätsqubits 4 ist geändert worden, weil der Zustand von damit verschränkten ein oder mehreren Datenqubits 6 und/oder 7 fehlerhaft war. Durch Messung der Spinzustände der Paritätsqubits 3 und 4 können daher Fehler erkannt werden.

Im Anschluss an eine Messung der Spinzustände der Paritätsqubits 3 und 4 können die Elektronen der Paritätsqubits 3 und 4 wieder in einen Fermi-See überführt werden.

Es können durch diese Architektur fortlaufend frische Paritätsqubits 1 bereitgestellt werden, um diese mit Datenqubits 6 und 7 zu verschränken und um schließlich die Spinzustände zwecks Fehlerkontrolle zu messen. Es ist also nicht erforderlich, bereits verwendete Paritätsqubits wieder zu verwenden. Auf einen Reset von bereits verwendeten Qubits kann vorteilhaft verzichtet werden. Die Architektur ist entlang der Datenqubit - Spalte beliebig fortsetzt war. Die Architektur ist also skalierbar. Die Architektur kann auf technisch einfache Weise hergestellt werden. Dies gilt insbesondere für den Fall, dass ein Halbleiter für die Bereitstellung von Qubits eingesetzt wird.

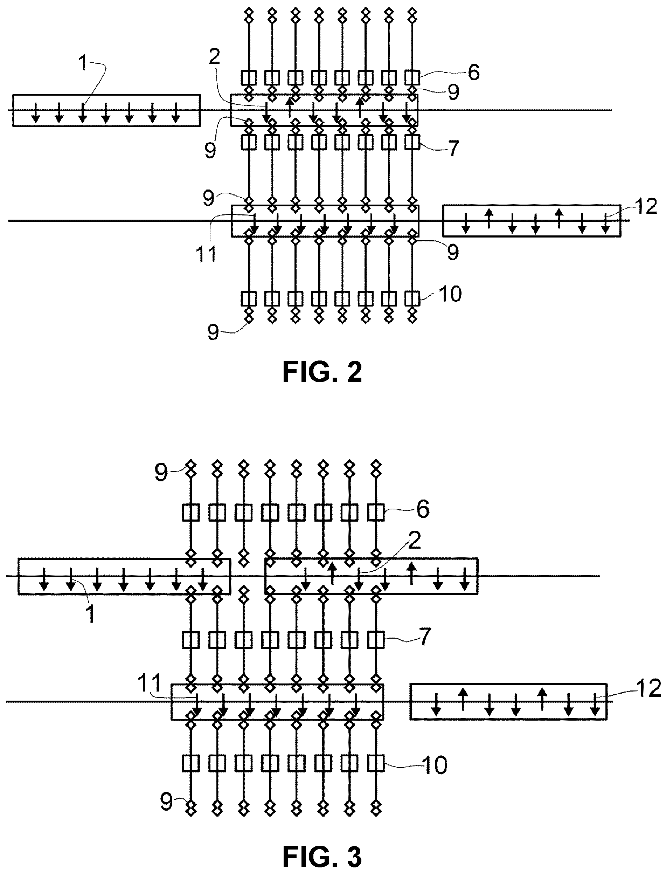

Die Figuren 2 bis 6 verdeutlichen näher eine mögliche Abfolge.

Die Figur 2 zeigt sieben Paritätsqubits 1, die einen solchen Abstand zu den acht Datenqubits 6 und 7 aufweisen, dass die Datenqubits 6 und 7 nicht mit den Paritätsqubits 1 verschränkt werden. Es gibt eine erste Reihe von acht Datenqubits 6 und gegenüberliegend eine zweite Reihe mit acht Datenqubits 7. Zwischen den Datenqubits 6 und 7 befinden sich sieben Paritätsqubits 2. Die Datenqubits 6 und 7 sind in maximal möglicher Weise aufeinander zubewegt worden. Der Abstand zwischen den Datenqubits 6 auf der einen Seite und den Datenqubits 7 auf der anderen Seite ist also minimiert. Eine darüber hinausgehende Verringerung des Abstandes ist aufgrund von Potenzialbarrieren 9 nicht möglich. Aufgrund dieses geringen Abstandes sind die Datenqubits 6 und 7 mit den Paritätsqubits 2 verschränkt worden. Da zwei Fehler bei den Datenqubits 6 und 7 aufgetreten sind, ist der Spin von zwei Paritätsqubits 2 umgeklappt worden. Es ist der Spinzustand von dem zweiten und vierten Paritätsqubit 2 geändert worden und zwar von links nach rechts gesehen. Diese befinden sich daher also nicht mehr im ursprünglichen "spin down" Zustand, sondern im "spin up" Zustand.

Die sieben Paritätsqubits 2 befinden sich derart zwischen den Datenqubits 6 und 7, dass das erste Paar der gegenüberliegenden Datenqubits 6 und 7 zuletzt nicht mehr an einer Verschränkung teilgenommen hat.

Unterhalb der acht Datenqubits 7 gibt es weitere acht Datenqubits 10, die in einer Reihe angeordnet sind. Die Datenqubits 7 und die Datenqubits 10 sind so voneinander entfernt, dass der Abstand zwischen den Datenqubits 7 und den Datenqubits 10 maximal ist.

Zwischen die Datenqubits 7 und die Datenqubits 10 sind sieben Paritätsqubits 11 gebracht worden. Da der Abstand zwischen den Datenqubits 7 und den Datenqubits 10 maximal ist, werden die Paritätsqubits 11 noch nicht mit den jeweils zugeordneten Paritätsqubits 7 und 10 verschränkt. Im Unterschied zu den Paritätsqubits 2 sind die Paritätsqubits 11 so zwischen die Datenqubits 7 und 10 bewegt worden, dass sich zwischen dem letzten Paar, also dem Paar auf der rechten Seite, der sich gegenüberliegenden Datenqubits 1 und 10 kein Paritätsqubit 11 befindet.

Rechts von den Paritätsqubits 11 befinden sich sieben Paritätsqubits 12, die im Anschluss an Verschränkungen von den Datenqubits 7 und 10 wegbewegt worden sind, sodass die Paritätsqubits 12. Diese Paritätsqubits 12 stehen zur Messung bereit.

Die in der Figur 3 gezeigten Datenqubits 6, 7 und 10 sind ausgehend von den in der Figur 2 gezeigten Positionen mit langsamer Geschwindigkeit in Zwischenstellungen zurückbewegt worden, da ein schnelles Bewegen der Datenqubits 6, 7 und 10 ein Fehlerrisiko erhöhen würde. Der Abstand der Datenqubits 6, 7 und 10 zu den Paritätsqubits 1, 2 und 11 ist so groß, dass keine Verschränkung zwischen Datenqubits und Paritätsqubits bewirkt werden kann. Daher werden die Paritätsqubits 2 nun ausgehend von der Situation aus Figur 2 nach rechts bewegt, um diese Messstationen zuzuführen. Dies geschieht mit einer größeren Geschwindigkeit im Vergleich zu der Geschwindigkeit, mit der die Datenqubits 6, 7 und 10 bewegt werden. Bei den Paritätsqubits 2 ist nämlich das Risiko gering, dass Fehler durch erhöhte Geschwindigkeiten verursacht werden. Zugleich werden die Paritätsqubits 1 ausgehend von der in der Figur 2 gezeigten Situation in Richtung Datenqubits 6 und 7 bewegt, um diese zwischen die Datenqubits 6 und 7 zu bringen. Auch dies geschieht mit der größeren Geschwindigkeit.

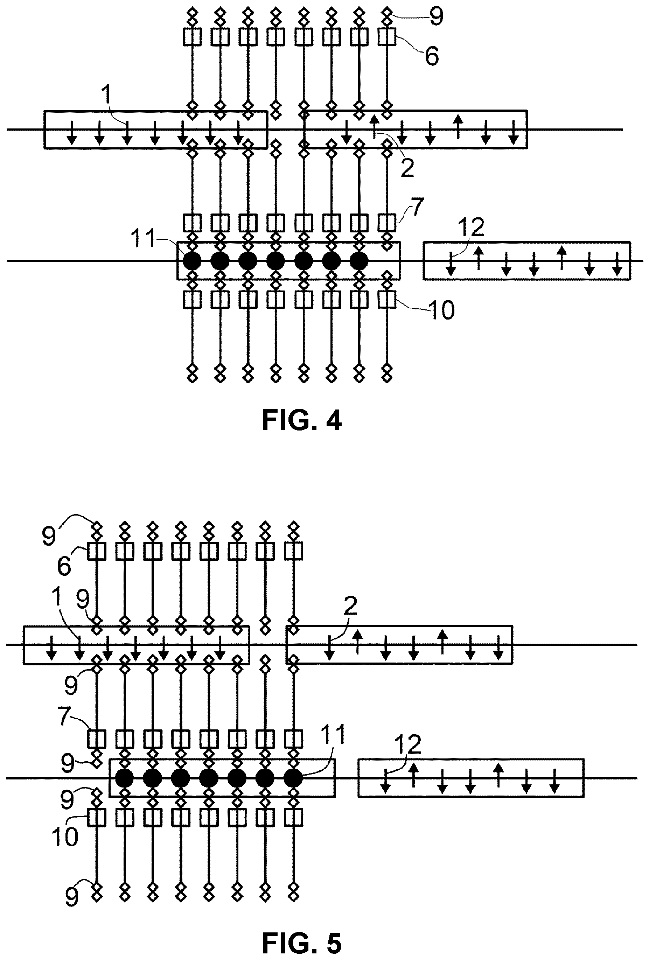

Ausgehend von der Figur 3 werden die Datenqubits 7 und 10 wie in der Figur 4 gezeigt in maximal möglicher Weise zu den Paritätsqubits 11 bewegt und zwar wiederum mit einer langsamen Geschwindigkeit. Der Abstand zwischen den Datenqubits 7 und 10 ist minimiert. Dies bewirkt eine Verschränkung, was in der Figur 4 durch eine Kreisdarstellung der Paritätsqubits 11 angedeutet wird. Während einer Verschränkung befindet sich ein jedes Paritätsqubit 11 zwischen einem Datenqubit 7 und einem Datenqubit 10. Paritätsqubits 11 sind also nicht seitlich versetzt gegenüber den Datenqubits 7 und 10 angeordnet.

Die Datenqubits 6 sind gemäß Figur 4 nach oben in maximal möglicher Weise von den Paritätsqubits 1 und 2 langsam weg bewegt worden. Der Abstand zwischen den Datenqubits 6 und 7 ist maximal. Daher können die Paritätsqubits 1 nicht mit den Datenqubits 6 und 7 verschränkt werden.

Außerdem wird in der Figur 4 gezeigt, dass die Paritätsqubits 2 weiter nach rechts bewegt werden, um die die Paritätsqubits 2 in eine Region zu bewegen, in der Bauraum für Messstationen zur Verfügung steht. Die Zustände der Paritätsqubits 2 können daher mit geringem technischem Aufwand gemessen werden. Außerdem werden die Paritätsqubits 1 weiter nach rechts zwischen die Datenqubits 6 und 7 bewegt. Die Paritätsqubits 1 und 2 werden weiterhin mit der schnellen Geschwindigkeit bewegt.

In der Figur 5 wird gezeigt, dass die Paritätsqubits 11 ausgehend von der in der Figur 4 gezeigten Situation so weiter bewegt worden sind, dass nun von links nach rechts gesehen die letzten sieben Datenqubits 7 und 10 mit den Paritätsqubits 11 verschränkt werden. Dies geschieht nun mit langsamer Geschwindigkeit, um das Auftreten von Fehlern zu vermeiden. Es wird erreicht, dass beispielsweise das erste Paritätsqubit 11 (von links nach rechts gesehen) mit den ersten beiden Datenqubits 7 und 10 und im Anschluss daran mit den Zweiten beiden Datenqubits 7 und 10 verschränkt worden ist bzw. verschränkt wird. Diese Vorgehensweise kann also dazu genutzt werden, um insgesamt vier Datenqubits 7 und 10 mit jeweils einem Paritätsqubit 11 zu verschränken, um verbessert Fehler erkennen zu können.

Beispielsweise die ersten beiden Datenqubitpaare 7 und 10 können sich aus Redundanzgründen im gleichen nicht messbaren Zustand befinden, um Fehlerquoten zu verringern.

Schrittweise kann also ein Paritätsqubit 11 mit Datenqubitpaaren 7 und 10 verschränkt werden.

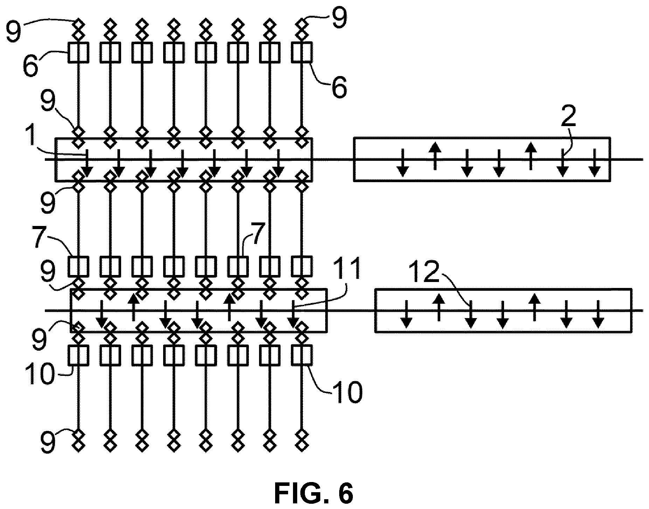

In der Figur 6 wird gezeigt, dass die Paritätsqubits 1 nun vollständig zwischen die Datenqubits 6 und 7 bewegt worden sind, sodass die ersten sieben Datenqubits 6 und 7 mit den Paritätsqubits 1 verschränkt werden, sobald die Datenqubits 6 und 7 zu den Paritätsqubits 1 in maximal möglicher Weise bewegt worden sind.

Die Paritätsqubits 2 sind vollständig von den Datenqubits 6 und 7 mit einer schnellen Geschwindigkeit wegbewegt worden und stehen nun für eine Messung bereit.

Die Verschränkung der Paritätsqubits 11 mit den Datenqubits 7 und 10 ist abgeschlossen worden. Daher sind Paritätsqubits 11 nun wieder durch Pfeile dargestellt. Der Zustand von zwei Paritätsqubits 11 ist geändert worden. Es sind also Fehler aufgetreten, die das Umklappen von zwei Spins bewirkt haben.

Die Zahl der dargestellten Datenqubits und/oder der Paritätsqubits kann geändert werden. So können beispielsweise anstelle von sieben Paritätsqubits auch neun Paritätsqubits eingesetzt sein, um diese mit insgesamt 16 Datenqubits zu verschränken.

Das Verfahren kann kontinuierlich durchgeführt werden. Die Zahl der bereitgestellten Messstationen kann so gewählt werden, dass durch das Messen keine Verzögerung eintritt. Werden beispielsweise nach einer Verschränkung sieben Paritätsqubits 12 heraus bewegt, so können beispielsweise mehr als sieben Messstationen vorhanden sein, so zum Beispiel 14. Die sieben Paritätsqubits 12 werden dann zu den ersten sieben Messstationen bewegt, um die Zustände durch Messen zu ermitteln. Die nächsten sieben Paritätsqubits werden dann zu den Messstationen 8-14 bewegt, um die Zustände durch Messen zu ermitteln, wenn die Messungen der Zustände der ersten sieben Paritätsqubits 12 noch nicht abgeschlossen worden ist. Die Zahl der Messstationen ist daher vorzugsweise wenigstens doppelt so groß wie die Zahl der Paritätsqubits, die nach einem Verschränken mit Datenqubits von den Datenqubits wegbewegt werden. Die Zahl der Messstationen kann so gewählt sein, dass Paritätsqubits "geparkt" werden können, damit das Messen an Messstationen Geschwindigkeiten nicht limitiert.

Die Figuren verdeutlichen, dass die Datenqubits nur über kurze Strecken bewegt werden im Vergleich zu den Strecken, entlang denen die Paritätsqubits bewegt werden können.

Die Figuren beziehen sich nur auf Beispiele. Der Schutzbereich der Ansprüche ist also nicht auf die Beispiele beschränkt.

## Patentansprüche

1. Verfahren zur Erkennung eines fehlerhaften Zustands eines Datenqubits (6, 7, 10) mithilfe eines Paritätsqubits (1, 2, 11, 12), wobei zumindest das Paritätsqubit (1, 2, 11, 12) durch eine Bewegungseinrichtung bewegt werden kann, wobei der Abstand zwischen dem Datenqubit (6, 7, 10) und dem Paritätsqubit (1, 11, 12) so groß ist, dass das Paritätsqubit (1, 11, 12) nicht mit dem Datenqubit (6, 7, 10) verschränkt werden kann, wobei der Abstand zwischen dem Datenqubit (6, 7, 10) und dem Paritätsqubit (1, 11) verringert wird, indem das Datenqubit (6, 7, 10) entlang eines ersten Wegs und das Paritätsqubit (1, 11) entlang eines zweiten Wegs bewegt werden, bis das Datenqubit (6, 7, 10) mit dem Paritätsqubit (1, 11) verschränkt werden kann, **dadurch gekennzeichnet, dass** der zweite Weg länger ist als der erste Weg und/oder dass die Bewegungsgeschwindigkeit des Paritätsqubits (1, 2, 11, 12) größer ist als die Bewegungsgeschwindigkeit des Datenqubits (6, 7, 10).

2. Verfahren nach Anspruch 1, **dadurch gekennzeichnet, dass** sich das Paritätsqubit (1) in einem messbaren Zustand befindet, bevor dieses zu ein oder mehreren Datenqubits (6, 7, 10) zwecks Verschränkung bewegt wird.

3. Verfahren nach einem der vorhergehenden Ansprüche, **dadurch gekennzeichnet, dass** das Paritätsqubit (1, 2, 11) zwischen zwei Datenqubits (6, 7, 10) bewegt wird.

4. Verfahren nach dem vorhergehenden Anspruch, **dadurch gekennzeichnet, dass** das Paritätsqubit (11) nach dem Bewegen zwischen zwei Datenqubits (7, 10) zwischen zwei weitere Datenqubits (7, 10) bewegt wird.

5. Verfahren nach einem der vorhergehenden Ansprüche, **dadurch gekennzeichnet, dass** das Paritätsqubit (2) nach einem Bewegen zwischen zwei Datenqubits (6, 7, 10) von Datenqubits (6, 7, 10) wegbewegt wird und der Zustand des Paritätsqubits (1, 2, 11, 12) gemessen wird.

6. Verfahren nach einem der vorhergehenden Ansprüche, **dadurch gekennzeichnet, dass** eine Mehrzahl von Paritätsqubits (1, 2, 11) zeitgleich zwischen Datenqubits (6, 7, 10) bewegt werden.

7. Verfahren nach einem der vorhergehenden Ansprüche, **dadurch gekennzeichnet, dass** eine Reihe von Paritätsqubits (1, 2, 11) zwischen zwei Reihen von Datenqubits (6, 7, 10) bewegt werden.

8. Verfahren nach einem der vorhergehenden Ansprüche, **dadurch gekennzeichnet, dass** eine Reihe von Paritätsqubits (1, 2, 11, 12) von zwei Reihen von Datenqubits (6, 7, 10) wegbewegt werden und im Anschluss daran aus der herausbewegten Reihe von Paritätsqubits (1, 2, 11, 12) die Paritätsqubits (1, 2, 11, 12) zu Messstationen (8) bewegt werden.

9. Verfahren nach einem der vorhergehenden Ansprüche, **dadurch gekennzeichnet, dass** ein Qubit zumindest ein Elektron umfasst, welches einen Spin ½ oder -½ haben kann.

10. Verfahren nach einem der vorhergehenden Ansprüche, **dadurch gekennzeichnet, dass** die Transporteinrichtung ein elektrisches Feld erzeugt und ein Qubit (1, 2, 6, 7) durch das elektrische Feld bewegt wird.

11. Vorrichtung zur Durchführung eines Verfahrens nach einem der vorhergehenden Ansprüche, wobei die Vorrichtung Datenqubits (6, 7, 10) und Paritätsqubits (1, 2, 11, 12) umfasst, wobei eine Bewegungseinrichtung vorhanden ist, mit der die Datenqubits (6, 7, 10) und die Paritätsqubits (1, 2, 11, 12) bewegt werden können, wobei der Abstand zwischen einem Datenqubit und einem Paritätsqubit so groß sein kann, dass das Paritätsqubit nicht mit dem Datenqubit (6, 7, 10) verschränkt werden kann, wobei der Abstand zwischen dem Datenqubit und dem Paritätsqubit verringert werden kann, indem das Datenqubit entlang eines ersten Wegs und das Paritätsqubit entlang eines zweiten Wegs bewegt werden, bis das Datenqubit (6, 7, 10) mit dem Paritätsqubit verschränkt werden kann, wobei eine Messstation vorhanden ist, mit der der Zustand des Paritätsqubits im Anschluss an eine Verschränkung gemessen werden kann, um zu überprüfen, ob sich ein Datenqubit in einem fehlerhaften Zustand befunden hat, **dadurch gekennzeichnet, dass** der erste Weg länger ist als der zweite Weg und/oder das die Bewegungsgeschwindigkeit des Paritätsqubits (1, 2, 11, 12) größer als die Bewegungsgeschwindigkeit des Datenqubits (6, 7, 10) sein kann.

12. Vorrichtung nach dem vorhergehenden Anspruch, **dadurch gekennzeichnet, dass** das Paritätsqubit (1, 2, 11, 12) sich in einem messbaren Zustand befindet und zwar insbesondere in einem Singulettzustand oder einem Triplettzustand.

13. Vorrichtung nach einem der beiden vorhergehenden Ansprüche, **dadurch gekennzeichnet, dass** das Paritätsqubit (1) zwischen zwei Datenqubits (6, 7, 10) bewegt werden kann.

14. Vorrichtung nach dem vorhergehenden Anspruch, **dadurch gekennzeichnet, dass** die Vorrichtung so eingerichtet ist, dass das Paritätsqubit (11) nach dem Bewegen zwischen zwei Datenqubits (6, 7, 10) zwischen zwei weitere Datenqubits (6, 7, 10) bewegt wird und zwar mit langsamer Geschwindigkeit.

15. Vorrichtung nach einem der vorhergehenden Vorrichtungsansprüche, **dadurch gekennzeichnet, dass** das Paritätsqubit nach einem Bewegen zwischen zwei Datenqubits (6, 7, 10) von Datenqubits (6, 7, 10) wegbewegt und der Zustand des wegbewegten Paritätsqubits (1, 2, 11, 12) gemessen werden kann.

16. Vorrichtung nach einem der vorhergehenden Vorrichtungsansprüche, **dadurch gekennzeichnet, dass** eine Mehrzahl von Paritätsqubits (1, 2, 11, 12) zeitgleich zwischen Datenqubits (6, 7, 10) bewegt werden kann.

17. Vorrichtung nach einem der vorhergehenden Vorrichtungsansprüche, **dadurch gekennzeichnet, dass** eine Reihe von Paritätsqubits (1, 2, 11, 12) zwischen zwei Reihen von Datenqubits (6, 7, 10) bewegt werden kann.

18. Vorrichtung nach einem der vorhergehenden Vorrichtungsansprüche, **dadurch gekennzeichnet, dass** eine Reihe von Paritätsqubits (1, 2, 11, 12) von zwei Reihen von Datenqubits (6, 7, 10) wegbewegt werden kann und im Anschluss daran aus der herausbewegten Reihe von Paritätsqubits (1, 2, 11, 12) die Paritätsqubits (1, 2, 11, 12) zu ein oder mehreren Messstationen (8) der Vorrichtung bewegt werden können.

19. Vorrichtung nach einem der vorhergehenden Vorrichtungsansprüche, **dadurch gekennzeichnet, dass** ein Paritätsqubits zwei Elektronen umfasst und sich das Paritätsqubit in einem Singulettzustand oder einem Triplettzustand befindet.

20. Vorrichtung nach einem der vorhergehenden Vorrichtungsansprüche, **dadurch gekennzeichnet, dass** die Transporteinrichtung ein elektrisches Feld erzeugen und ein Qubit durch das elektrische Feld bewegt werden kann.

## Claims

1. Method for detecting a faulty state of a data qubit (6, 7, 10) using a parity qubit (1, 2, 11, 12), wherein at least the parity qubit (1, 2, 11, 12) can be moved by a movement device, wherein the distance between the data qubit (6, 7, 10) and the parity qubit (1, 11, 12) is so large that the parity qubit (1, 11, 12) cannot be entangled with the data qubit (6, 7, 10), wherein the distance between the data qubit (6, 7, 10) and the parity qubit (1, 11) is reduced by moving the data qubit (6, 7, 10) along a first path and the parity qubit (1, 11) along a second path until the data qubit (6, 7, 10) can be entangled with the parity qubit (1, 11), **characterized in that** the second path is longer than the first path and/or **in that** the speed of movement of the parity qubit (1, 2, 11, 12) is greater than the speed of movement of the data qubit (6, 7, 10).

2. Method according to claim 1, **characterized in that** the parity qubit (1) is in a measurable state before it is moved to one or more data qubits (6, 7, 10) for entangling.

3. Method according to one of the preceding claims, **characterized in that** the parity qubit (1, 2, 11) is moved between two data qubits (6, 7, 10).

4. Method according to the preceding claim, **characterized in that** after moving between two data qubits (7, 10), the parity qubit (11) is moved between two further data qubits (7, 10).

5. Method according to one of the preceding claims, **characterized in that** the parity qubit (2) is moved away from data qubits (6, 7, 10) after moving between two data qubits (6, 7, 10) and the state of the parity qubit (1, 2, 11, 12) is measured.

6. Method according to one of the preceding claims, **characterized in that** a plurality of parity qubits (1, 2, 11) are moved between data qubits (6, 7, 10) at the same time.

7. Method according to one of the preceding claims, **characterized in that** a row of parity qubits (1, 2, 11) are moved between two rows of data qubits (6, 7, 10).

8. Method according to one of the preceding claims, **characterized in that** a row of parity qubits (1, 2, 11, 12) are moved away from two rows of data qubits (6, 7, 10) and subsequently, the parity qubits (1, 2, 11, 12) are moved from the moved-out row of parity qubits (1, 2, 11, 12) to measuring stations (8).

9. Method according to one of the preceding claims, **characterized in that** a qubit comprises at least one electron which may have a spin ½ or -½.

10. Method according to one of the preceding claims, **characterized in that** the transport device generates an electric field and a qubit (1, 2, 6, 7) is moved by the electric field.

11. Apparatus for performing a method according to one of the preceding claims, **characterized in that** the apparatus comprises data qubits (6, 7, 10) and parity qubits (1, 2, 11, 12), wherein a movement device is provided, with which the data qubits (6, 7, 10) and the parity qubits (1, 2, 11, 12) can be moved, wherein the distance between a data qubit and a parity qubit can be so large that the parity qubit cannot be entangled with the data qubit (6, 7, 10), wherein the distance between the data qubit and the parity qubit can be reduced by moving the data qubit along a first path and the parity qubit along a second path until the data qubit (6, 7, 10) can be entangled with the parity qubit, wherein a measuring station is provided, with which the state of the parity qubit can be measured following entanglement to check if a data qubit has been in a faulty state, **characterized in that** the first path is longer than the second path and/or that the speed of movement of the parity qubit (1, 2, 11, 12) can be greater than the speed of movement of the data qubit (6, 7, 10).

12. Apparatus according to the preceding claim, **characterized in that** the parity qubit (1, 2, 11, 12) is in a measurable state and in particular in a singlet state or a triplet state.

13. Apparatus according to one of the two preceding claims, **characterized in that** the parity qubit (1) can be moved between two data qubits (6, 7, 10).

14. Apparatus according to the preceding claim, **characterized in that** the apparatus is configured such that after moving between two data qubits (6, 7, 10), the parity qubit (11) is moved between two further data qubits (6, 7, 10) at a slow speed.

15. Apparatus according to one of the preceding apparatus claims, **characterized in that** the parity qubit can be moved away from data qubits (6, 7, 10) after moving between two data qubits (6, 7, 10) and the state of the moved-away parity qubit (1, 2, 11, 12) can be measured.

16. Apparatus according to one of the preceding apparatus claims, **characterized in that** a plurality of parity qubits (1, 2, 11, 12) can be moved between data qubits (6, 7, 10) at the same time.

17. Apparatus according to one of the preceding apparatus claims, **characterized in that** a row of parity qubits (1, 2, 11, 12) can be moved between two rows of data qubits (6, 7, 10).

18. Apparatus according to one of the preceding apparatus claims, **characterized in that** a row of parity qubits (1, 2, 11, 12) can be moved away from two rows of data qubits (6, 7, 10) and subsequently, the parity qubits (1, 2, 11, 12) can be moved from the moved-out row of parity qubits (1, 2, 11, 12) to one or more measuring stations (8) of the apparatus.

19. Apparatus according to one of the preceding apparatus claims, **characterized in that** a parity qubits comprises two electrons and the parity qubit is in a singlet state or a triplet state.

20. Apparatus according to one of the preceding apparatus claims, **characterized in that** the transport device can generate an electric field and a qubit can be moved by the electric field.

## Revendications

1. Procédé pour détecter un état erroné d'un qubit de données (6, 7, 10) à l'aide d'un qubit de parité (1, 2, 11, 12), dans lequel au moins le qubit de parité (1, 2, 11, 12) peut être déplacé par un dispositif de déplacement, dans lequel la distance entre le qubit de données (6, 7, 10) et le qubit de parité (1, 11, 12) est si grande que le qubit de parité (1, 11, 12) ne peut pas être intriqué avec le qubit de données (6, 7, 10), dans lequel la distance entre le qubit de données (6, 7, 10) et le qubit de parité (1, 11) est réduite en déplaçant le qubit de données (6, 7, 10) le long d'un premier chemin et le qubit de parité (1, 11) le long d'un deuxième chemin jusqu'à ce que le qubit de données (6, 7, 10) peut être intriqué avec le qubit de parité (1, 11), **caractérisé en ce que** le deuxième chemin est plus long que le premier chemin et/ou **en ce que** la vitesse de déplacement du qubit de parité (1, 2, 11, 12) est supérieure à la vitesse de déplacement du qubit de données (6, 7, 10).

2. Procédé selon la revendication 1, **caractérisé en ce que** le qubit de parité (1) se trouve dans un état mesurable avant d'être déplacé vers un ou plusieurs qubits de données (6, 7, 10) à des fins d'intrication.

3. Procédé selon l'une des revendications précédentes, **caractérisé en ce que** le qubit de parité (1, 2, 11) est déplacé entre deux qubits de données (6, 7, 10).

4. Procédé selon la revendication précédente, **caractérisé en ce que** le qubit de parité (11), après avoir été déplacé entre deux qubits de données (7, 10), est déplacé entre deux autres qubits de données (7, 10).

5. Procédé selon l'une des revendications précédentes, **caractérisé en ce que** le qubit de parité (2), après avoir été déplacé entre deux qubits de données (6, 7, 10), est déplacé loin des qubits de données (6, 7, 10) et l'état du qubit de parité (1, 2, 11, 12) est mesuré.

6. Procédé selon l'une des revendications précédentes, **caractérisé en ce qu'**une pluralité de qubits de parité (1, 2, 11) peut être déplacée simultanément entre des qubits de données (5, 7, 10).

7. Procédé selon l'une des revendications précédentes, **caractérisé en ce qu'**une série de qubits de parité (1, 2, 11) est déplacée entre deux séries de qubits de données (6, 7, 10).

8. Procédé selon l'une des revendications précédentes, **caractérisé en ce qu'**une série de qubits de parité (1, 2, 11, 12) est déplacée loin de deux séries de qubits de données (5, 7, 10) et, à la suite de cela, les qubits de parité (1, 2, 11, 12) de la série de qubits de parité (1, 2, 11, 12) éloignée sont déplacés vers des stations de mesure (8).

9. Procédé selon l'une des revendications précédentes, **caractérisé en ce qu'**un qubit comprend au moins un électron qui peut avoir un spin ½ ou -½.

10. Procédé selon l'une des revendications précédentes, **caractérisé en ce que** le dispositif de transport génère un champ électrique et qu'un qubit (1, 2, 6, 7) est déplacé par le champ électrique.

11. Dispositif pour mettre en œuvre un procédé selon l'une des revendications précédentes, dans lequel le dispositif comprend des qubits de données (6, 7, 10) et des qubits de parité (1, 2, 11, 12), dans lequel un dispositif de déplacement est prévu, à l'aide duquel les qubits de données (6, 7, 10) et les qubits de parité (1, 2, 11, 12) peuvent être déplacés, dans lequel la distance entre un qubit de données et un qubit de parité peut être si grande que le qubit de parité ne peut pas être intriqué avec le qubit de données (6, 7, 10), dans lequel la distance entre le qubit de données et le qubit de parité peut être réduite en déplaçant le qubit de données le long d'un premier chemin et le qubit de parité le long d'un deuxième chemin jusqu'à ce que le qubit de données (6, 7, 10) peut être intriqué avec le qubit de parité, dans lequel une station de mesure est prévue avec laquelle l'état du qubit de parité peut être mesuré à la suite d'une intrication afin de vérifier si un qubit de données s'est trouvé dans un état erroné,
**caractérisé en ce que** le premier chemin est plus long que le deuxième chemin et/ou **en ce que** la vitesse de déplacement du qubit de parité (1, 2, 11, 12) peut être supérieure à la vitesse de déplacement du qubit de données (6, 7, 10).

12. Dispositif selon la revendication précédente, **caractérisé en ce que** le qubit de parité (1, 2, 11, 12) se trouve dans un état mesurable, en particulier dans un état singulet ou un état triplet.

13. Dispositif selon l'une des deux revendications précédentes, **caractérisé en ce que** le qubit de parité (1) peut être déplacé entre deux qubits de données (6, 7, 10).

14. Dispositif selon la revendication précédente, **caractérisé en ce que** le dispositif est conçu de telle sorte que le qubit de parité (11), après avoir été déplacé entre deux qubits de données (6, 7, 10), est déplacé entre deux autres qubits de données (6, 7, 10) à savoir à une vitesse lente.

15. Dispositif selon l'une des revendications de dispositif précédentes, **caractérisé en ce que** le qubit de parité, après avoir été déplacé entre deux qubits de données (6, 7, 10), peut être déplacé loin des qubits de données (6, 7, 10) et que l'état du qubit de parité déplacé loin (1, 2, 11, 12) peut être mesuré.

16. Dispositif selon l'une des revendications de dispositif précédentes, **caractérisé en ce qu'**une pluralité de qubits de parité (1, 2, 11, 12) peut être déplacée simultanément entre des qubits de données (6, 7, 10).

17. Dispositif selon l'une des revendications de dispositif précédentes, **caractérisé en ce qu'**une série de qubits de parité (1, 2, 11, 12) peut être déplacée entre deux séries de qubits de données (6, 7, 10).

18. Dispositif selon l'une des revendications de dispositif précédentes, **caractérisé en ce qu'**une série de qubits de parité (1, 2, 11, 12) peut être déplacée loin de deux séries de qubits de données (6, 7, 10) et, à la suite de cela, les qubits de parité (1, 2, 11, 12) de la série de qubits de parité (1, 2, 11, 12) éloignée peuvent être déplacés vers une ou plusieurs stations de mesure (8) du dispositif.

19. Dispositif selon l'une des revendications de dispositif précédentes, **caractérisé en ce qu'**un qubit de parité comprend deux électrons et que le qubit de parité se trouve dans un état singulet ou dans un état triplet.

20. Dispositif selon l'une des revendications de dispositif précédentes, **caractérisé en ce que** le dispositif de transport peut générer un champ électrique et qu'un qubit peut être déplacé par le champ électrique.
